(19) Europäisches Patentamt
European Patent Office
Office européen des brevets

(11) **EP 3 135 945 A1**

(12) **EUROPEAN PATENT APPLICATION**
published in accordance with Art. 153(4) EPC

(43) Date of publication:
**01.03.2017 Bulletin 2017/09**

(51) Int Cl.:
*F16D 48/02* (2006.01)

(21) Application number: **15783731.1**

(86) International application number:
**PCT/JP2015/062503**

(22) Date of filing: **24.04.2015**

(87) International publication number:
**WO 2015/163445 (29.10.2015 Gazette 2015/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **25.04.2014 JP 2014092098**

(71) Applicant: **Aisin Seiki Kabushiki Kaisha
Kariya-shi, Aichi 448-8650 (JP)**

(72) Inventor: **TAMARU, Daisuke
Kariya-shi,
Aichi 448-8650 (JP)**

(74) Representative: **Kramer Barske Schmidtchen
Patentanwälte PartG mbB
European Patent Attorneys
Landsberger Strasse 300
80687 München (DE)**

(54) **VEHICLE DRIVING FORCE CONTROL DEVICE**

(57)    A driving force control device according to an embodiment can set data characterizing a function indicating the correlation between a clutch manipulated variable and a clutch transmission torque as reference data stored in a function data storage. Thus, reference data is reduced in size from reference data being a map including data pairs.

## FIG.3

**Description**

TECHNICAL FIELD

The present invention relates to a vehicle driving force control device.

BACKGROUND ART

Conventionally, there has been known a vehicle driving force control device that includes a map (table) as reference data indicating the correlation between a clutch manipulated variable for operating a clutch and a torque (clutch transmission torque) transmitted by the clutch in a so-called half-clutch state according to the clutch manipulated variable, and obtains a target clutch manipulated variable (command value) corresponding to the clutch transmission torque with reference to the map. The map includes pairs of data indicating the clutch manipulated variable and data indicating the clutch transmission torque which are associated with each other. Such a conventional vehicle driving force control device can also obtain a clutch transmission torque corresponding to a clutch manipulated variable with reference to the map.

PRIOR ART DOCUMENT

PATENT DOCUMENT

Patent Document 1: Japanese Patent Publication No. 4394386

DISCLOSURE OF INVENTION

PROBLEM TO BE SOLVED BY THE INVENTION

In the above conventional vehicle driving force control device, as the number of data pairs of the clutch manipulated variable and the clutch transmission torque included in the map increases, the size of the map, that is, the size of reference data in a data storage area of the vehicle driving force control device increases, resulting in increasing the storage capacity of a reference data storing area in a storage.

One object of the present invention is to attain a vehicle driving force control device that can reduce the size of reference data for obtaining a clutch manipulated variable corresponding to a clutch transmission torque or for obtaining a clutch transmission torque corresponding to a clutch manipulated variable.

MEANS FOR SOLVING PROBLEM

A vehicle driving force control device according to an embodiment includes a clutch manipulated variable acquirer that acquires a clutch manipulated variable by which a clutch transmission torque transmitted by a clutch is changed, a clutch transmission torque acquirer that acquires the clutch transmission torque corresponding to the clutch manipulated variable, a function calculator that calculates a function of the clutch manipulated variable and the clutch transmission torque by regression analysis of the clutch manipulated variables acquired by the clutch manipulated variable acquirer and the clutch transmission torques acquired corresponding to the clutch manipulated variables by the clutch transmission torque acquirer, a function data writer that writes function data that characterizes the function, into a function data storage, an input value acquirer that acquires an input value of one of the clutch manipulated variable and the clutch transmission torque, and an output value acquirer that acquires an output value of the other of the clutch manipulated variable and the clutch transmission torque corresponding to the input value, on the basis of the function. Thus, the vehicle driving force control device can set, as reference data for obtaining a clutch manipulated variable corresponding to a clutch transmission torque or for obtaining a clutch transmission torque corresponding to a clutch manipulated variable, for example, data that characterizes a function such as a coefficient of a function. This can reduce the size of reference data from that of reference data being a map including data pairs. Thus, a storage capacity of a reference data storing area of the storage is further reduced.

In the vehicle driving force control device, the function calculator calculates a plurality of linear functions of regions of the clutch transmission torque or the clutch manipulated variable, the functions being continuous with each other at a boundary between the regions. Thus, the vehicle driving force control device uses a combination of linear functions, thereby more simply executing the regression analysis by the function calculator than the use of a higher-order function. Further, the accuracy of the function is higher than that of a single linear function.

In the vehicle driving force control device, the function calculator uses, as a boundary condition, a function value at a boundary of one of the regions of the calculated function of the clutch transmission torque to calculate the function for another one of the regions adjacent to the one region. Thus, the vehicle driving force control device can prevent discontinuous output values caused by discontinuous functions.

In the vehicle driving force control device, when a predetermined number of pairs of the clutch manipulated variables and the clutch transmission torques corresponding to the clutch manipulated variables are acquired in one of the regions, the function calculator calculates the function of the one region from the predetermined number of pairs of the clutch manipulated variables and the clutch transmission torques, and the function data writer updates data characterizing the function stored in the function data storage to data characterizing the function calculated by the function calculator. Thus, the vehicle driving force control device can obtain a function having a smaller deviation from actual values.

In the vehicle driving force control device, when pairs of the clutch manipulated variables and the clutch transmission torques corresponding to the clutch manipulated variables are acquired in one of the regions, and at least either a difference in the clutch manipulated variables or the clutch transmission torques of the pairs is equal to or larger than a corresponding threshold, the function calculator calculates the function of the one region from the pairs of the clutch manipulated variables and the clutch transmission torques. The function data writer updates data characterizing the function stored in the function data storage to data characterizing the function calculated by the function calculator. Thus, the vehicle driving force control device is prevented from obtaining a function having a larger deviation from actual values by regression analysis based on pairs of values close to each other.

The vehicle driving force control device includes a representative value calculator that calculates, when at least either a difference in the clutch manipulated variables or the clutch transmission torques of the pairs in the one region is smaller than a corresponding threshold, a representative value of the clutch manipulated variables and a representative value of the clutch transmission torques that represent the pairs. The function calculator uses the representative values of the pairs of the clutch manipulated variables and the clutch transmission torques for calculation of the function. Thus, the vehicle driving force control device is prevented from obtaining a function having a larger deviation from actual values by regression analysis based on pairs of values close to each other.

The vehicle driving force control device includes a representative value calculator that calculates, when a predetermined number of pairs of the clutch manipulated variables and the clutch transmission torques corresponding to the clutch manipulated variables are acquired in at least one of sub regions of one of the regions, a representative value of the clutch manipulated variables and a representative value of the clutch transmission torques that represent the one of the sub regions. The function calculator uses, for calculation of the function, the representative value of the clutch manipulated variables and the representative value of the clutch transmission torques that represent the sub region. Thus, the vehicle driving force control device can more easily calculate a representative value by setting a representative value for each sub region.

The vehicle driving force control device includes a past data writer that writes past data of each of the sub regions to a past data storage, the past data being for obtaining an average value of the clutch manipulated variables in the past, an average value of the clutch transmission torques in the past corresponding to the average value of the clutch manipulated variables, the number of acquisitions of the clutch manipulated variables, and the clutch transmission torques in the past. The representative value calculator calculates the representative value $x_n$ of the clutch manipulated variables and the representative value $T_n$ of actual values of the clutch transmission torques with reference to the past data storage by the following equations:

$$x_n = (x_a \times n + x_c)/(n + 1),$$

and

$$T_n = (T_a \times n + T_c)/(n + 1)$$

where $x_a$ denotes the average value of the clutch manipulated variables in the past, $T_a$ denotes the average value of the clutch transmission torques in the past, $n$ denotes the number of acquisitions in the past, $x_c$ denotes a clutch manipulated variable acquired by the clutch manipulated variable acquirer, $T_c$ denotes a clutch transmission torque acquired by the clutch transmission torque acquirer corresponding to the clutch manipulated variable, $x_n$ denotes the representative value of the clutch manipulated variables, and $T_n$ denotes the representative value of the clutch transmission torques. Thus, the vehicle driving force control device can obtain a representative value that reflects a past history.

In the vehicle driving force control device, the function calculator calculates the function of another one of the regions adjacent to the one region so that a change rate of the clutch transmission torque with respect to the clutch manipulated variable of the function of another region falls within a predetermined range. Thus, the vehicle driving force control device is prevented from obtaining a function having a larger deviation from actual values.

BRIEF DESCRIPTION OF DRAWINGS

FIG. 1 is a schematic diagram illustrating a vehicle configuration that includes a vehicle driving force control device of an embodiment;
FIG. 2 is a function block diagram illustrating the vehicle driving force control device of the embodiment;
FIG. 3 is a graph illustrating the relationship between a clutch manipulated variable and a clutch transmission torque in the vehicle driving force control device of the embodiment;
FIG. 4 is a schematic diagram illustrating regression analysis (least square approximation) in the vehicle driving force control device of the embodiment;
FIG. 5 is a flow chart of a procedure for calculating (updating) a function representing the correlation between the clutch manipulated variable and the clutch transmission torque by the vehicle driving force control device of the embodiment;
FIG. 6 is a flow chart of a procedure for calculating a function for each region by the vehicle driving force control device of the embodiment;
FIG. 7 is a schematic diagram illustrating a limitation on a change rate of a function in a region adjacent to one region of a clutch transmission torque characteristic of the vehicle driving force control device of the embodiment; and
FIG. 8 is a flow chart of a procedure for controlling an engine by the vehicle driving force control device of the embodiment.

BEST MODE FOR CARRYING OUT THE INVENTION

Hereinbelow, an exemplary embodiment of the present invention will be disclosed. A configuration of the embodiment described below, and an action and a result (effect) brought by the configuration are merely examples. The present invention can be achieved also by a configuration other than the configuration disclosed in the following embodiment and can obtain various effects (including a derivative effect) based on the basic configuration.

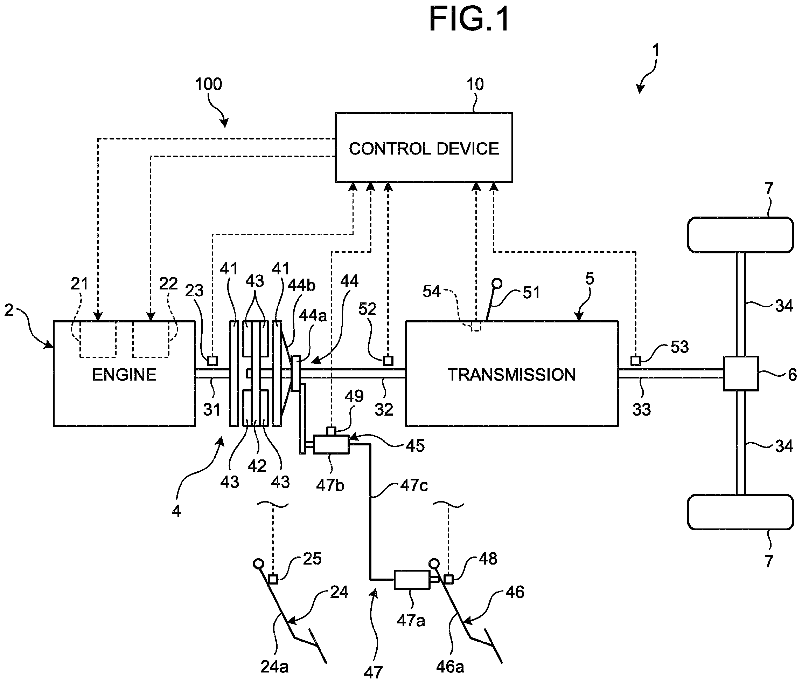

In the present embodiment, as illustrated in FIG. 1, a vehicle 1 (e.g., a four-wheeled vehicle) includes an engine 2 as a driving source. The torque (rotation) of the engine 2 is transmitted to a wheel 7 through a shaft 31, a clutch 4, a shaft 32, a transmission 5, a shaft 33, a differential gear 6, and a shaft 34. Although, in the present embodiment, the vehicle 1 is configured as a rear-wheel-drive vehicle, the vehicle 1 may be configured as a front-wheel-drive vehicle or a four-wheel-drive vehicle (all-wheel-drive vehicle). The vehicle 1 may include a motor generator (not illustrated) as a driving source.

The engine 2 (internal combustion engine) is an internal combustion engine of a port injection type or an in-cylinder injection type (direct injection), for example that uses fuel such as gasoline, light oil, alcohol, or hydrogen. The engine 2 is controlled by a control device 10. The control device 10 is capable of controlling the torque (engine torque) and the rotation speed (rotation rate) of the engine 2 by, for example, controlling the position of a throttle valve 21 of the engine 2 or the injection amount of a fuel injection valve 22. A sensor 23 is provided for the shaft 31 at the output of the engine 2 to detect the rotation speed of the shaft 31. The control device 10 can obtain the rotation speed (rotation rate, output rotation speed, output rotation rate) of the engine 2 from a signal from the sensor 23. The rotation speed of the engine 2 can be also obtained from a rotation speed of another part (e.g., a shaft). The control device 10 may obtain data indicating the rotation speed from the sensor 23.

The control device 10 changes the torque and the rotation speed of the engine 2 according to a clutch manipulated variable (stroke, displacement, position) of a movable member 24a (e.g., an arm) of an operation unit 24 (e.g., an acceleration pedal). A sensor 25 is provided for the movable member 24a to detect the clutch manipulated variable of the movable member 24a. The control device 10 obtains the clutch manipulated variable of the movable member 24a from a signal of the sensor 25. The control device 10 may obtain data indicating the clutch manipulated variable of the movable member 24a from the sensor 25.

The control device 10 is configured as, for example, an electronic control unit (ECU). The ECU includes, for example, a micro control unit (MCU). The MCU includes a central processing unit (CPU), a main storage (memory), an auxiliary storage, an interface (input/output device), a communication device, and a bus (all of them not illustrated). The main storage is, for example, a read only memory (ROM) or a random access memory (RAM). The auxiliary storage is, for example, a flash memory. The control device 10 may be configured as an integrated ECU or may include an engine ECU which is an ECU for the engine 2 and a transmission ECU which is an ECU for the transmission 5. In the MCU, the CPU executes arithmetic processing in accordance with a program installed in, for example, the main storage so as to control the respective elements including the engine 2. The MCU may include a field programmable gate array (FPGA) and an application specific integrated circuit (ASIC).

The clutch 4 is, for example, a dry single-plate clutch. The clutch 4 is placed in any of the following states: connected (transmission state) to transmit the torque (rotation) from the shaft 31 to the shaft 32; interrupted (non-transmission state) to transmit no torque from the shaft 31 to the shaft 32; and slipped (so-called half-clutch state) to allow the shaft 31 and the shaft 32 to slip each other. The clutch 4 includes a rotational member 41 (e.g., a flywheel or a pressure plate) and a rotational member 42 (e.g., a clutch disc). The rotational member 41 rotates integrally with the input-side shaft 31 and the rotational member 42 rotates integrally with the output-side shaft 32. A frictional member 43 is interposed between the rotational members 41, 42. The clutch 4 changes the torque (rotation) transmission (transmission rate, transmission degree) by changing the degree of slippage of these rotational members 41, 42 (between the rotational member 41 and the frictional member 43, for example) . A movable member 44 changes the position (relative axial position, distance, closeness, state of separation) of one of the rotational members (the rotational member 42 in the present embodiment) with respect to the other rotational member (the rotational member 41 in the present embodiment). The movable member 44 includes a member 44a (e.g., a release bearing) and a member 44b (e.g., a diaphragm spring). An actuator 45 (e.g., a piston mechanism, a linear actuator, a motor, a movement mechanism, or a drive mechanism) moves the movable member 44 to change the position of the rotational member 42 relative to the rotational member 41.

A manipulated variable (displacement, position, stroke, control amount) of the movable member 44 when moved by the actuator 45 changes according to a manipulated variable (displacement, position, stroke, control amount) of a movable member 46a (e.g., an arm) of an operation unit 46 (e.g., a clutch pedal). The actuator 45 is hydraulic and moved through a hydraulic mechanism 47. The hydraulic mechanism 47 includes a master cylinder 47a, a slave cylinder 47b, and a pipe 47c. Pressed by the movable member 46a, a piston (not illustrated) of the master cylinder 47a generates a hydraulic pressure and transmits it through an oil path inside the pipe 47c to a piston (not illustrated) of the slave cylinder 47b to move the movable member 44. In this structure, the slave cylinder 47b is at least a part of the actuator 45. The actuator 45 may be configured as an electric actuator (e.g., a linear actuator or a motor (not illustrated)). In this case, the control device 10 controls the actuator 45 to move the movable member 44 to thereby change the connected state of the clutch 4. A sensor 48 detects the manipulated variable (position) of the movable member 46a. That is, the control device 10 can obtain the manipulated variable of the movable member 46a from a signal or data from the sensor 48. A sensor 49 detects a manipulated variable of a movable unit inside the slave cylinder 47b. The manipulated variable of the movable unit of the slave cylinder 47b corresponds to the manipulated variable of the movable member 44. That is, the control device 10 can obtain the manipulated variable of the movable member 44 from a signal or data from the sensor 49. A control amount of the actuator 45 to move the movable member 44 corresponds to the manipulated variable of the movable member 44. Thus, when controlling the actuator 45 to move the clutch 4, the control device 10 can obtain the manipulated variable of the movable unit from the control amount of the actuator 45. In the present embodiment, the movable member 44 and the movable member 46a are examples of the movable unit (operation unit) that changes the clutch transmission torque. Although the present embodiment exemplifies a dry single-plate clutch for the clutch 4, the clutch 4 may be another type friction clutch (e.g., a wet multi-plate clutch).

In the present embodiment, the transmission 5 (gearbox) is configured as a manual transmission which shifts gears by a manual operation of a driver. A sensor 52 and a sensor 53 are provided for the shaft 32 at the input of the transmission 5 (output of the clutch 4) and the shaft 33 at the output of the transmission 5 for detecting the rotation speeds (rotation rates) of the shaft 32 and the shaft 33, respectively. The control device 10 can obtain the rotation speed (rotation rate) of the shafts 32, 33 from signals from the sensors 52, 53.

The control device 10 can know a meshing gear pair (gear position) of the transmission 5 from a signal from a sensor 54 (e.g., a shift sensor) provided in the transmission 5 and use the gear pair for the start or finish of a gear shifting. The control device 10 may obtain data indicating the gear position or the start or finish of a gear shifting from the sensor 54.

In the present embodiment, during a gear shifting the control device 10 controls the engine 2 according to the manipulated variable of the movable unit (e.g., the movable member 46a or the movable member 44) for the clutch 4 regardless of the manipulated variable (displacement, position, angle, stroke) of the movable member 24a of the operation unit 24. In the slipping state (so-called half-clutch state) in which the shaft 31 (the rotational member 41) and the shaft 32 (the rotational member 42) relatively rotate in the clutch 4, the torque transmitted by the clutch 4 (hereinbelow, referred to as "clutch transmission torque") changes according to the manipulated variable of the movable unit for the clutch 4. Even during the high output torque of the engine 2, no torque is transmitted if it exceeds the clutch transmission torque. In the present embodiment, during the gear shifting the control device 10 thus controls the engine 2 to increase or decrease the torque in accordance with an increased or decreased clutch transmission torque. The control device 10 can thereby attain effects such as reductions in unnecessary energy consumption and unnecessary rise of the rotation speed of the engine 2. The torque control of the engine 2 according to the clutch transmission torque may be performed by other operations than the gear shifting.

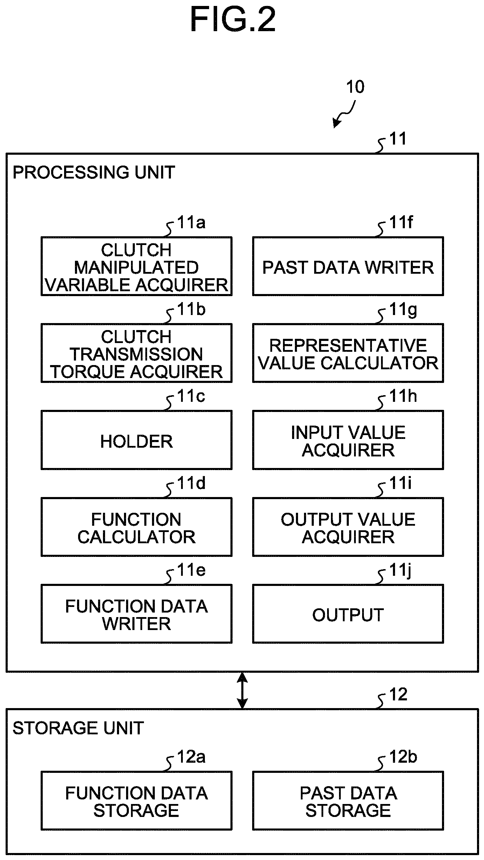

Examples of the calculation and control by a processing unit 11 (the control device 10) will be now described with reference to FIGS. 2 to 8.

As illustrated in FIG. 2, the control device 10 includes the processing unit 11 (e.g., a CPU) and a storage unit 12 (e.g., an auxiliary storage). The processing unit 11 can function (operate) as a clutch manipulated variable acquirer 11a, a clutch transmission torque acquirer 11b, a holder 11c, a function calculator 11d, a function data writer 11e, a past data writer 11f, a representative value calculator 11g, an input value acquirer 11h, an output value acquirer 11i, and an output 11j as illustrated in FIG. 2 through the collaboration between hardware and software (program). That is, the program includes, for example, modules corresponding to the respective blocks of the processing unit 11 illustrated in FIG. 2.

In the present embodiment, the processing unit 11 calculates a function representing the correlation between the manipulated variable (clutch manipulated variable) of the movable unit for the clutch 4 and the clutch transmission torque. The clutch manipulated variable acquirer 11a acquires a manipulated variable. The clutch transmission torque acquirer 11b acquires an actual value (an estimated value, a calculated value, original data of the function) of the clutch transmission torque that corresponds to the manipulated variable acquired by the clutch manipulated variable acquirer 11a. The holder 11c temporarily holds data on the manipulated variable and the actual value of the clutch transmission torque which are a candidate for the calculation of the function. The function calculator 11d calculates a function of the manipulated variable and the clutch transmission torque by regression analysis based on pairs of values acquired by the clutch manipulated variable acquirer 11a and the clutch transmission torque acquirer 11b (hereinbelow, may be merely referred to as "data pairs"). The function data writer 11e writes data of the function (data indicating the function, data that characterizes the function, e.g., coefficients or constants) into a function data storage 12a (a first storage area) of the storage unit 12. The past data writer 11f writes past data for use in a subsequent calculation of a function (e.g., a past actual value or a past representative value) into a past data storage 12b (a second storage area) of the storage unit 12. The representative value calculator 11g calculates a representative value (e.g., an average value) of pairs of manipulated variables and clutch transmission torques. The above processing elements relate to the calculation of a function. Preset function data is stored in the function data storage 12a when the use of the vehicle 1 is started. The representative value should not be limited to an average value and may be, for example, a median value or a value obtained by adding a predetermined value to an average value.

The processing unit 11 (the control device 10) uses the function stored (set, calculated, or updated) in the function data storage 12a to obtain the clutch transmission torque as an output value corresponding to the manipulated variable as an input value or the manipulated variable as an output value corresponding to the clutch transmission torque as an input value and controls the respective units according to the output value. The input value acquirer 11h acquires an input value of the manipulated variable or the clutch transmission torque. The output value acquirer 11i acquires, on the basis of the function, an output value as a function value corresponding to the input value acquired by the input value acquirer 11h. The output 11j outputs a signal based on the output value (e.g., a control signal for the engine 2 or a control signal for the clutch 4). That is, the output 11j may be also referred to as a control signal output.

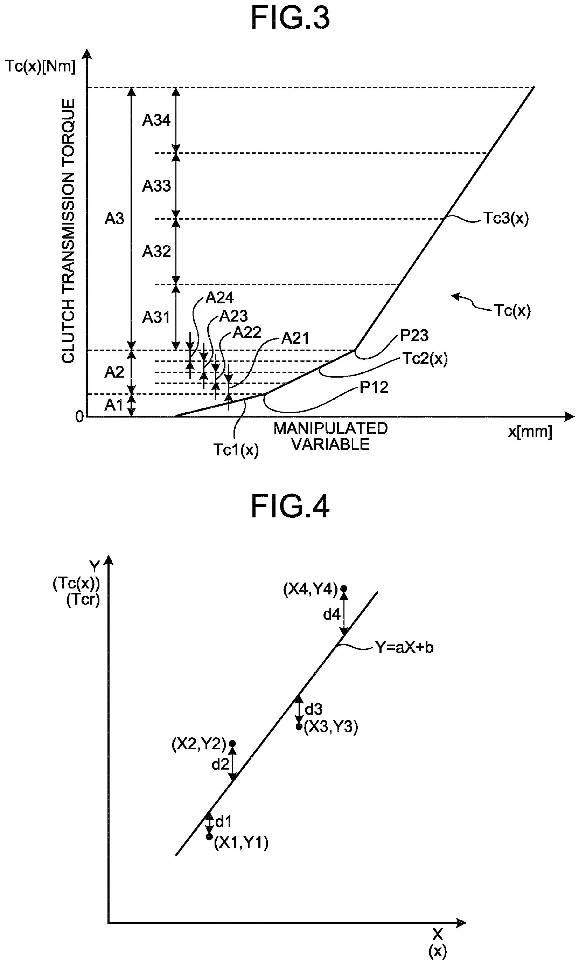

In the present embodiment, the clutch transmission torque is defined as a function $Tc(x)$ with respect to the manipulated variable x as illustrated in FIG. 3. The function $Tc(x)$ includes linear functions $Tc1(x)$, $Tc2(x)$, and $Tc3(x)$ in multiple regions (e.g., three regions in the present embodiment) A1 to A3 (ranges) of the clutch transmission torque, respectively. The regions A1 to A3 are set adjacent to and not overlapping each other and divided depending on the values of the clutch transmission torque. In the region A1 the clutch transmission torque exhibits smaller values, in the region A3 the clutch transmission torque exhibits larger values, and in the region A2 the clutch transmission torque exhibits intermediate values. The adjacent functions $Tc1(x)$ and $Tc2(x)$ are continuous at a boundary point P12 and the adjacent functions $Tc2(x)$ and $Tc3(x)$ are continuous at a boundary point P23. In the present embodiment, the gradient (a differential value by the manipulated variable x) of the function $Tc2(x)$ is set to be larger than the gradient of the function $Tc1(x)$ and the gradient of the function $Tc3(x)$ in line with the actual characteristics of the clutch 4. The regions may be also divided depending on the values of the manipulated variable x.

An example of the calculation of a function by least square approximation will be described for an example of regression analysis with reference to FIG. 4. For convenience, the manipulated variable x is denoted by $Xi$ (or X, i = 1 to n, n = 4 in FIG. 4), and the actual value Tcr of the clutch transmission torque is denoted by $Yi$ (or Y, i = 1 to n, n = 4 in FIG. 4). The number of data pairs (hereinbelow, also referred to as "points" for convenience) of $Xi$ and $Yi$, which are used as a base for the calculation of the function, is n. By the least square approximation, for example, acquired is a linear function having the smallest sum of distances $di$ (i = 1 to n, n = 4 in FIG. 4) from the respective points in the Y direction. That is, the sum S of the distances between a function of $Y = aX + b$ (that is, $Tc2(x) = a \times x + b$) and the respective points can be represented by the following Equation (1):

$$ S = \sum \left\{ Yi - \left( a \times Xi + b \right) \right\}^2 \qquad (1) $$

The function calculator 11d calculates a function having the smallest S. Since the calculation is a known method, the calculation process will not be described. In this case, a coefficient a is represented by:

$$a = \frac{(\sum Xi)(\sum Yi) - (\sum 1)(\sum XiYi)}{(\sum Xi)^2 - (\sum 1)(\sum Xi^2)} \qquad (2)$$

Further, a coefficient b is represented by:

$$b = \frac{(\sum Xi)(\sum XiYi) - (\sum Yi)(\sum Xi^2)}{(\sum Xi)^2 - (\sum 1)(\sum Xi^2)} \qquad (3)$$

The function calculator 11d can calculate a function (coefficients) for the region A2 by the Equations (2) and (3). In Equations (2) and (3), the following is satisfied:

$$\sum Xi = \sum_{i=1}^{n} Xi \quad \left(The\ same\ applies\ to\ Yi, XiYi, Xi^2\right), \quad \sum 1 = \sum_{i=1}^{n} 1 = n \qquad (4)$$

The function calculator 11d calculates the coefficients of the function for the region A2 (refer to FIG. 3) by the Equations (1) to (3). For the regions A1, A3, the function calculator 11d calculates functions (Tc1(x), Tc3(x)) of the manipulated variable and the clutch transmission torque, the functions passing end points of the function in the region A2, or the boundary points P12, P23. When a value of the boundary point P12 or the boundary point P23 is (p, q), the sum S of the distances between the function of Y = a(x - p) + q (that is, Tc1(x)= a(x - p) + q, or Tc3(x)=a(x - p) + q) passing the boundary point P12 or the boundary point P23 and the respective points can be represented by Equation (5) similar to Equation (1):

$$S = \sum \left[Yi - \{a \times (Xi - p) + q\}\right]^2 \qquad (5)$$

The function calculator 11d calculates a function having the smallest S. Since the calculation is known, the calculation process will not be described. In this case, a coefficient a is represented by:

$$a = \frac{(\sum XiYi) - q(\sum Xi) - p(\sum Yi) + (\sum 1)pq}{(\sum Xi^2) - 2p(\sum Xi) + (\sum 1)p^2} \qquad (6)$$

Further, a coefficient b can be obtained on the basis of the coefficient a by:

$$b = -a \times p + q \qquad (7)$$

The function calculator 11d can calculate the functions (coefficients) of the region A1 and the region A3 by the Equations (6) and (7), respectively.

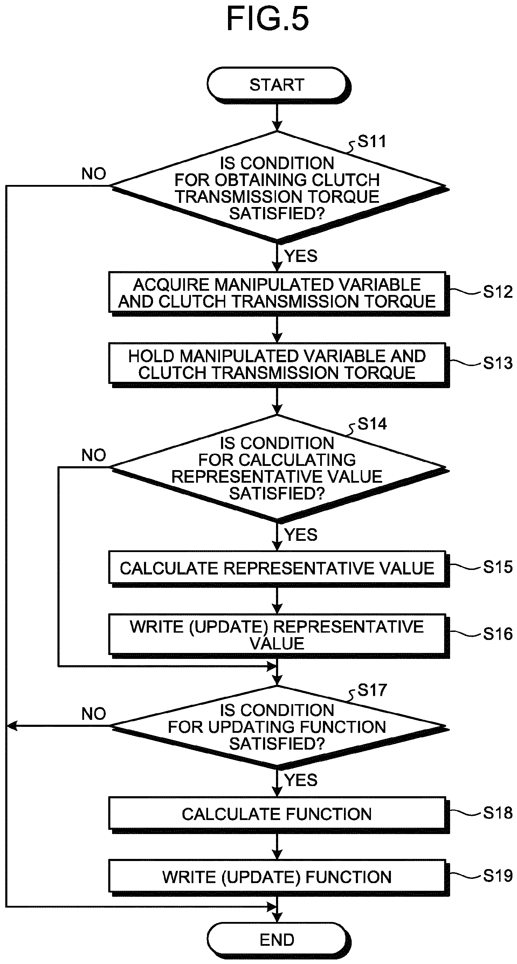

The processing unit 11 calculates the function Tc(x) following the procedure illustrated in FIG. 5. The processing unit 11 calculates the function Tc(x) by regression analysis (e.g., least square approximation) of data pairs of manipulated variables x and the actual values Tcr of the clutch transmission torque. The processing unit 11 calculates the actual values Tcr of the clutch transmission torque on the basis of the assumption that, when there is no change with time in the torque of the engine 2 (when change is negligible), that is, a change with time (a time derivative) in the rotation speed of the engine 2 is equal to or below a threshold, the engine torque and the clutch transmission torque have substantially the same value. That is, the processing unit 11 first functions as the clutch manipulated variable acquirer 11a and the clutch transmission torque acquirer 11b, to acquire a manipulated variable x and the actual value Tcr of the clutch transmission torque (S12) when the condition for obtaining the actual value Tcr of the clutch transmission torque is satisfied, that is, when, for example, the change with time in the rotation speed of the engine 2 is equal to or below the threshold (Yes in S11). In S12 the clutch manipulated variable acquirer 11a acquires the manipulated variable x. Further, the clutch transmission torque acquirer 11b acquires the torque (output torque) of the engine 2 as the clutch transmission torque from the rotation speed, the fuel injection amount, or the air flow rate of the engine 2 by a known method, and acquires the torque of the engine 2 as the actual value Tcr of the clutch transmission torque. Then, the processing unit 11 functions as the holder 11c (a holding controller, a holding processor) to temporarily hold the manipulated variable x and the actual value Tcr of the clutch transmission torque acquired in S12, that is, a data pair to be a candidate for the calculation of the function Tc(x) (S13). In S13, the data pair may be held in a volatile storage (memory) such as a RAM or may be stored in a nonvolatile storage such as a flash memory. In the case of No in S11, the processing by the flow of FIG. 5 is finished.

Then, the processing unit functions as the representative value calculator 11g. Specifically, when the data pairs held in S13 satisfy the condition for calculating a representative value, that is, when, of the data pairs, a difference between values of the manipulated variable x or values of the clutch transmission torque is equal to or below the corresponding threshold (Yes in S14), the processing unit 11 calculates a representative value (e.g., an average value or an arithmetic mean value) of the data pairs that satisfy the condition (S15). Then, the processing unit 11 functions as the past data writer 11f, and writes (updates) the representative value calculated in S15 into the past data storage 12b (S16). A function, when calculated from data pairs of values close to each other by regression analysis (least square approximation), may have a large margin of error. In the present embodiment, for the data pairs of values close to each other, the representative value of the data pairs is calculated to prevent a large margin of error in the function. In the case of No in S14, the processing proceeds to S17.

In the present embodiment, for example, as illustrated in FIG. 3, each of the regions A1 to A3 for which the function is calculated can be divided depending on the values of the clutch transmission torque to set sub regions (A21 to A24, A31 to A34). The sub regions are set adjacent to and not overlapping each other and divided according to the values of the clutch transmission torque. The representative value calculator 11g can sort the data pairs acquired in S12 into the sub regions according to the actual values Tcr of the clutch transmission torque. In this case, the holder 11c holds the data pairs in association with the corresponding sub regions in S13. In S14, for example, when the number of data pairs corresponding to each sub region reaches a predetermined number (e.g., two) or is equal to or above (held or stored) a predetermined number (e.g., two) and another data pair corresponding to the sub region concerned is newly acquired, the representative value calculator 11g can calculate a representative value for the sub region concerned. In S16, the past data writer 11f can store the representative value calculated in S15 in the past data storage 12b in association with the sub region. Although not illustrated in FIG. 3, sub regions are also set in the region A1.

For the set sub regions, the representative value calculator 11g can calculate the representative value as an average value of the newly-acquired data pair and the past data pairs stored in the past data storage 12b. Specifically, the representative value calculator 11g can calculate a representative value xn of the manipulated variable x and a representative value Tn of the actual value Tcr of the clutch transmission torque by the following Equations (8) and (9):

$$xn = (xa \times n + xc)/(n + 1) \qquad (8)$$

$$Tn = (Ta \times n + Tc)/(n + 1) \qquad (9)$$

By the Equations (8) and (9), the representative values xn, Tn are calculated on the basis of an average value xa of the past manipulated variables x, an average value Ta of the past actual values Tcr of the clutch transmission torque, the number n of past data pair acquisitions, a newly acquired manipulated variable xc by the clutch manipulated variable acquirer 11a, and an actual value Tc (past data) of the clutch transmission torque acquired by the clutch transmission torque acquirer 11b corresponding to the manipulated variable xc. In this case, the past data writer 11f can store the average value xa, the average value T, and the acquisition number n in the past data storage 12b in association with the sub region in S16. This can reduce the size of past data stored in the past data storage 12b from that of all of the past data pairs stored in the past data storage 12b.

Then, the processing unit 11 functions as the function calculator 11d. Specifically, when the data pairs acquired in S12 (held in S13) or the representative value calculated in S15 (written in S16) satisfies the condition for calculating (updating) a function, that is, when the number of data pairs or pairs of representative values to be a base of the function reaches a predetermined number (e.g., four or more) or when the representative value of the sub region is updated (Yes in S17), the processing unit 11 calculates the function by the above method (S18). Then, the processing unit 11 functions as the function data writer 11e to write the function (data on the function, coefficient) to the function data storage 12a (S19). In the case of No in S17, the processing by the flow of FIG. 5 is finished.

In the present embodiment, the function is calculated on the basis of the representative value of each sub region in S18. This can set the condition for the data pairs to be the base of the function calculation to ensure a certain degree of difference in the manipulated variables or in the actual values of the clutch transmission torque. That is, according to the present embodiment, setting the sub regions results in preventing a large margin of error in the function calculated by regression analysis from the data pairs of values close to each other. Instead of setting the sub regions, the data pairs may be a base for the calculation of a function if the difference in at least either the manipulated variables or the clutch transmission torques of the data pairs is equal to or larger than the corresponding threshold. This also attains the same or similar effects as the setting of sub regions.

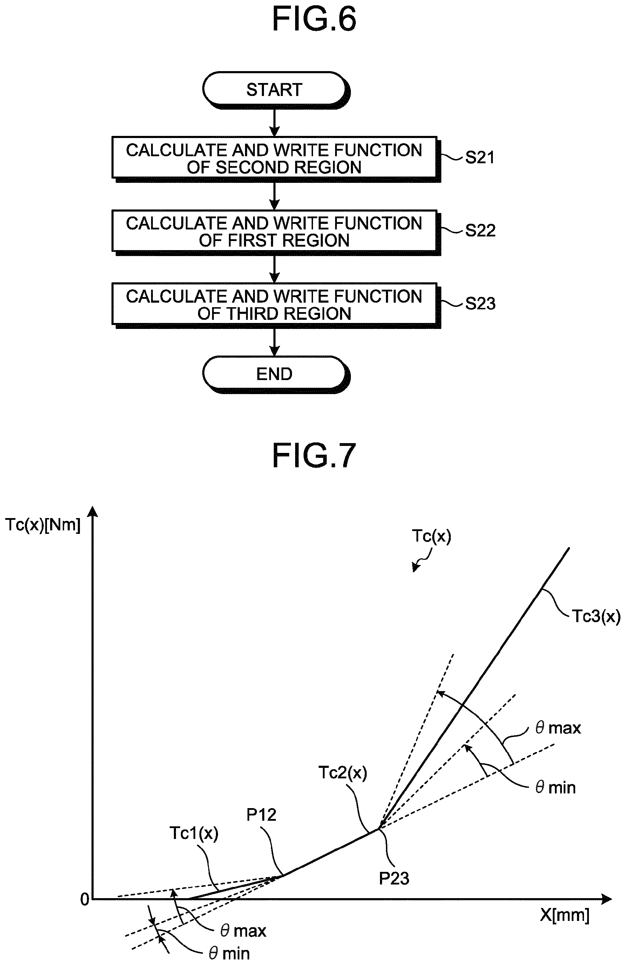

In the present embodiment, as illustrated in FIG. 6, regarding S16 and S18, the function calculator 11d and the function data writing unit 11e precede the calculation of the function Tc2(x) of the region A2 (one region, a second region) and the writing of data of the function Tc2(x) (S21), respectively, over the calculation of the function Tc1(x) of the region A1 (another region adjacent to the one region, a first region) and the writing of data of the function Tc1(x) (S22) and the calculation of the function Tc3(x) of the region A3 (another region adjacent to the one region, a third region) and the writing of the function Tc3(x) (S23). The function of the region A1 and the function of the region A3 are calculated by the Equations (5) to (7) from data pairs at the boundary points P12, P23 of the region A2 set as a boundary condition. It does not matter which one of S22 and S23 is performed first. For example, in the case of acquiring data pairs for multiple regions at different frequencies, a function may be first calculated in a region (one region) having a higher (larger) frequency of data pair acquisition (number, number of times, number of acquisitions per unit time), to calculate a function of a region (another region) adjacent to the high-frequency region using data pairs at the ends of the higher-frequency region (one region) as a boundary condition.

For the calculation of the functions Tc1(x), Tc3(x) for the regions A1, A3 (other regions) after the calculation of the function Tc2(x) for the region A2 (one region) (S21), as illustrated in FIG. 7, a limitation can be imposed on a change rate dTc1(x)/dx, dTc3(x)/dx of the clutch transmission torque (hereinbelow, merely referred to as change rate) with respect to the manipulated variable x. Specifically, as illustrated in FIG. 7, the condition can be such that the change rate dTc1(x)/dx of the region A1 and the change rate dTc3(x)/dx of the region A3 fall within a predetermined range $\theta$min to $\theta$max which is defined on the basis of the change rate dTc2(x)/dx of the region A2. When failing to obtain, for the other regions, a function that satisfies the change rate condition based on one region, the function calculator 11d can calculate a function having a change rate of $\theta$min or $\theta$max (one closer to an obtained gradient) by least squares method.

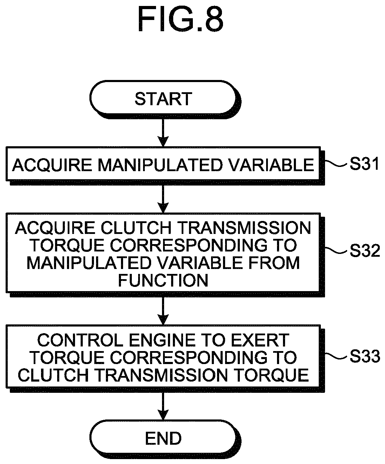

The processing unit 11 (the control device 10) can control the engine 2 by, for example, the procedure illustrated in FIG. 8 according to the function obtained in the above manner. Specifically, the processing unit 11 first functions as the input value acquirer 11h and acquires a manipulated variable (S31). The manipulated variable acquired by the input value acquirer 11h in S31 is an example of the input value. Then, the processing unit 11 functions as the output value acquirer 11i and acquires a clutch transmission torque corresponding to the manipulated variable with reference to the function stored in the function data storage 12a (S32). The clutch transmission torque acquired by the output value acquirer 11i in S32 is an example of the output value. Then, the processing unit 11 functions as the output 11j (the control signal output) and outputs a signal for controlling the engine 2 to exert a torque set corresponding to the clutch transmission torque (S33). The procedure (control) illustrated in FIG. 8 is merely an example. For example, the input value acquirer 11h may acquire a command value (target value) of the clutch transmission torque, the output value acquirer 11i may acquire a manipulated variable corresponding to the command value (target value) with reference to the function stored in the function data storage 12a, and the output unit 11j may output a signal for controlling an actuator (not illustrated) to electrically drive the clutch 4 by the acquired manipulated variable.

As described above, in the present embodiment, for example, reference data stored in the function data storage 12a can be function data indicating the correlation between the manipulated variable x and the clutch transmission torque. Thus, according to the present embodiment, for example, reference data can be reduced in size from the one being a map including multiple data pairs. A storage capacity of a reference data storing area in the function data storage 12a is further reduced accordingly.

In the present embodiment, for example, the function includes the linear functions of the clutch transmission torque or the manipulated variable for the respective regions A1 to A3, the functions being continuous with each other at the boundary points P12, P23 among the regions A1 to A3. Thus, according to the present embodiment, for example, by use of a combination of linear functions, the function calculator 11d can more simply execute the regression analysis. Further, the storage capacity of the reference data storing area in the function data storage 12a is further reduced. The accuracy of the function is higher than that of a single linear function.

In the present embodiment, for example, the function calculator 11d uses, as the boundary condition, the function value (p, q) of the calculated function of the manipulated variable and the clutch transmission torque at the boundary points P12, P23 of one region A2, for calculating the functions for the other regions A1, A3 adjacent to the region A2. Thus, according to the present embodiment, for example, discontinuous output values caused by discontinuous functions are prevented.

In the present embodiment, for example, the function is updated when a predetermined number of pairs of the manipulated variables and the actual values Tcr of the clutch transmission torque corresponding to the manipulated variables are acquired in each of the regions A1 to A3. Thus, according to the present embodiment, for example, a function having a smaller deviation from actual values can be obtained.

In the present embodiment, for example, the function is updated when, of data pairs, at least either the difference in the manipulated variables or the difference in the clutch transmission torques is equal to or larger than the corresponding threshold. Thus, according to the present embodiment, for example, a function having a larger deviation from actual values is prevented from being obtained by regression analysis based on pairs of values close to each other.

In the present embodiment, for example, when, of data pairs, at least either the difference in the manipulated variables or the difference in the actual values Tcr of the clutch transmission torque is smaller than the corresponding threshold, the representative value calculator 11g calculates a representative value of the manipulated variables and a representative value of the clutch transmission torques that represent the data pairs, and the function calculator 11d uses the representative value of the manipulated variables and the representative value of the actual values Tcr of the clutch transmission torque of the pairs for the calculation of a function. Thus, according to the present embodiment, for example, a function having a larger deviation from actual values is prevented from being obtained by regression analysis based on pairs of values close to each other.

In the present embodiment, for example, the function calculator 11d calculates a function on the basis of a representative value of the manipulated variables and a representative value of the clutch transmission torques that represent a sub region. Thus, according to the present embodiment, for example, representative values can be more easily calculated by setting a representative value for each sub region. Further, for example, a function having a larger deviation from actual values is prevented from being obtained by regression analysis based on pairs of values close to each other.

In the present embodiment, for example, the representative value calculator 11g calculates the representative value xn of the manipulated variables and the representative value Tn of the actual values of the clutch transmission torque with reference to the past data storage 12b by the following equations:

$$xn = (xa \times n + xc)/(n + 1),$$

and

$$Tn = (Ta \times n + Tc)/(n + 1)$$

where xa denotes an average value of the manipulated variable in the past, Ta denotes an average value of the clutch transmission torques in the past, n denotes the number of data pair acquisitions in the past, xc denotes an manipulated variable acquired by the clutch manipulated variable acquirer 11a, Tc denotes an actual value of the clutch transmission torque acquired by the clutch transmission torque acquirer 11b corresponding to the manipulated variable, xn denotes a representative value of the manipulated variables, and Tn denotes a representative value of the actual values of the clutch transmission torque. Thus, according to the present embodiment, for example, representative values that reflect a past history can be obtained.

In the present embodiment, for example, the function calculator 11d calculates the functions of the other regions A1, A3 adjacent to the one region A2 so that the change rate of the clutch transmission torque with respect to the manipulated variable in the functions of the other regions A1, A3 falls within a predetermined range. Thus, according to the present embodiment, for example, a function having a larger deviation from actual values is prevented from being obtained.

Although the embodiment of the present invention has been described above, the above embodiment is merely an example and there is no intention to limit the scope of the invention. The above embodiment can be implemented in other various forms, and various omissions, replacements, combinations, and modifications can be made without departing from the gist of the invention.

The control device according to the illustrated embodiment can be configured as various control devices such as an engine control device which controls an engine and a clutch control device which controls a clutch.

The configuration according to the above embodiment can be applied also to an automated manual transmission (AMT) which performs gear shift of a manual transmission as described above by an actuator on the basis of an electric signal. In this case, the control unit can control each unit on the basis of the control amount (control command) of a movable unit which changes the clutch transmission torque. The manipulated variable in this case corresponds to the control amount. The movable unit may be another member which moves according to the manipulated variable of the clutch. The same applies to a vehicle in which an operator (driver) does not operate a clutch except an AMT.

The clutch may be a clutch of another type. The number of regions and sub regions relating to the function, range, or characteristics of the function should not also be limited to those in the above embodiment, and can be set in various manners.

EXPLANATIONS OF LETTERS OR NUMERALS

    10 CONTROL DEVICE (VEHICLE DRIVING FORCE CONTROL DEVICE)
    11a CLUTCH MANIPULATED VARIABLE ACQUIRER
    11b CLUTCH TRANSMISSION TORQUE ACQUIRER
    11d FUNCTION CALCULATOR
    11e FUNCTION DATA WRITER
    11f PAST DATA WRITER
    11g REPRESENTATIVE VALUE CALCULATOR
    11h INPUT VALUE ACQUIRER
    11i OUTPUT VALUE ACQUIRER
    12a FUNCTION DATA STORAGE
    12b PAST DATA STORAGE

**Claims**

1. A vehicle driving force control device comprising:

    a clutch manipulated variable acquirer that acquires a clutch manipulated variable by which a clutch transmission torque transmitted by a clutch is changed;
    a clutch transmission torque acquirer that acquires the clutch transmission torque corresponding to the clutch manipulated variable;
    a function calculator that calculates a function of the clutch manipulated variable and the clutch transmission torque by regression analysis of the clutch manipulated variables acquired by the clutch manipulated variable acquirer and the clutch transmission torques acquired corresponding to the clutch manipulated variables by the clutch transmission torque acquirer;
    a function data writer that writes function data that characterizes the function, into a function data storage;
    an input value acquirer that acquires an input value of one of the clutch manipulated variable and the clutch transmission torque; and
    an output value acquirer that acquires an output value of the other of the clutch manipulated variable and the clutch transmission torque corresponding to the input value, on the basis of the function.

2. The vehicle driving force control device according to claim 1, wherein the function calculator calculates a plurality of linear functions of regions of the clutch transmission torque or the clutch manipulated variable, the functions being continuous with each other at a boundary between the regions.

3. The vehicle driving force control device according to claim 2, wherein the function calculator uses, as a boundary condition, a function value at a boundary of one of the regions of the calculated function of the clutch transmission torque to calculate the function for another one of the regions adjacent to the one region.

4. The vehicle driving force control device according to claim 2 or 3, wherein
    when a predetermined number of pairs of the clutch manipulated variables and the clutch transmission torques corresponding to the clutch manipulated variables are acquired in one of the regions,
    the function calculator calculates the function of the one region from the predetermined number of pairs of the clutch manipulated variables and the clutch transmission torques, and
    the function data writer updates data characterizing the function stored in the function data storage to data characterizing the function calculated by the function calculator.

5. The vehicle driving force control device according to claim 2 or 3, wherein
    when pairs of the clutch manipulated variables and the clutch transmission torques corresponding to the clutch manipulated variables are acquired in one of the regions, and at least either a difference in the clutch manipulated variables or the clutch transmission torques of the pairs is equal to or larger than a corresponding threshold, the function calculator calculates the function of the one region from the pairs of the clutch manipulated variables and the clutch transmission torques, and

the function data writer updates data characterizing the function stored in the function data storage to data characterizing the function calculated by the function calculator.

6. The vehicle driving force control device according to claim 4 or 5, further comprising a representative value calculator that calculates, when at least either a difference in the clutch manipulated variables or the clutch transmission torques of the pairs in the one region is smaller than a corresponding threshold, a representative value of the clutch manipulated variables and a representative value of the clutch transmission torques that represent the pairs, wherein the function calculator uses the representative values of the pairs of the clutch manipulated variables and the clutch transmission torques for calculation of the function.

7. The vehicle driving force control device according to claim 4 or 5, further comprising a representative value calculator that calculates, when a predetermined number of pairs of the clutch manipulated variables and the clutch transmission torques corresponding to the clutch manipulated variables are acquired in at least one of sub regions of one of the regions, a representative value of the clutch manipulated variables and a representative value of the clutch transmission torques that represent the one of the sub regions, wherein

the function calculator uses, for calculation of the function, the representative value of the clutch manipulated variables and the representative value of the clutch transmission torques that represent the sub region.

8. The vehicle driving force control device according to claim 7, further comprising a past data writer that writes past data of each of the sub regions to a past data storage, the past data being for obtaining an average value of the clutch manipulated variables in the past, an average value of the clutch transmission torques in the past corresponding to the average value of the clutch manipulated variables, the number of acquisitions of the clutch manipulated variables, and the clutch transmission torques in the past, wherein

the representative value calculator calculates the representative value xn of the clutch manipulated variables and the representative value Tn of actual values of the clutch transmission torques with reference to the past data storage by the following equations:

$$xn = (xa \times n + xc)/(n + 1),$$

and

$$Tn = (Ta \times n + Tc)/(n + 1)$$

where xa denotes the average value of the clutch manipulated variables in the past, Ta denotes the average value of the clutch transmission torques in the past, n denotes the number of acquisitions in the past, xc denotes a clutch manipulated variable acquired by the clutch manipulated variable acquirer, Tc denotes a clutch transmission torque acquired by the clutch transmission torque acquirer corresponding to the clutch manipulated variable, xn denotes the representative value of the clutch manipulated variables, and Tn denotes the representative value of the clutch transmission torques.

9. The vehicle driving force control device according to claim 2, wherein the function calculator calculates the function of another one of the regions adjacent to the one region so that a change rate of the clutch transmission torque with respect to the clutch manipulated variable of the function of another region falls within a predetermined range.

# FIG.1

EP 3 135 945 A1

# FIG.2

10

11

## PROCESSING UNIT

### 11a
CLUTCH MANIPULATED VARIABLE ACQUIRER

### 11b
CLUTCH TRANSMISSION TORQUE ACQUIRER

### 11c
HOLDER

### 11d
FUNCTION CALCULATOR

### 11e
FUNCTION DATA WRITER

### 11f
PAST DATA WRITER

### 11g
REPRESENTATIVE VALUE CALCULATOR

### 11h
INPUT VALUE ACQUIRER

### 11i
OUTPUT VALUE ACQUIRER

### 11j
OUTPUT

12

## STORAGE UNIT

### 12a
FUNCTION DATA STORAGE

### 12b
PAST DATA STORAGE

# FIG.3

# FIG.4

# FIG.5

START

↓

S11

IS CONDITION
FOR OBTAINING CLUTCH
TRANSMISSION TORQUE
SATISFIED?

NO ←

↓ YES

ACQUIRE MANIPULATED VARIABLE
AND CLUTCH TRANSMISSION TORQUE — S12

↓

HOLD MANIPULATED VARIABLE AND
CLUTCH TRANSMISSION TORQUE — S13

↓

S14

IS CONDITION
FOR CALCULATING
REPRESENTATIVE VALUE
SATISFIED?

NO ←

↓ YES

CALCULATE REPRESENTATIVE VALUE — S15

↓

WRITE (UPDATE) REPRESENTATIVE
VALUE — S16

↓

S17

IS CONDITION
FOR UPDATING FUNCTION
SATISFIED?

NO ←

↓ YES

CALCULATE FUNCTION — S18

↓

WRITE (UPDATE) FUNCTION — S19

↓

END

# FIG.6

```
        ┌──────────────┐
        │    START     │
        └──────┬───────┘
               │
               ▼
┌──────────────────────────────┐
│ CALCULATE AND WRITE FUNCTION  │ ─── S21
│     OF SECOND REGION          │
└──────────────┬───────────────┘
               │
               ▼
┌──────────────────────────────┐
│ CALCULATE AND WRITE FUNCTION  │ ─── S22
│      OF FIRST REGION          │
└──────────────┬───────────────┘
               │
               ▼
┌──────────────────────────────┐
│ CALCULATE AND WRITE FUNCTION  │ ─── S23
│      OF THIRD REGION          │
└──────────────┬───────────────┘
               │
               ▼
        ┌──────────────┐
        │     END      │
        └──────────────┘
```

# FIG.7

# FIG.8

START

↓

ACQUIRE MANIPULATED VARIABLE — S31

↓

ACQUIRE CLUTCH TRANSMISSION
TORQUE CORRESPONDING TO
MANIPULATED VARIABLE FROM
FUNCTION — S32

↓

CONTROL ENGINE TO EXERT
TORQUE CORRESPONDING TO
CLUTCH TRANSMISSION TORQUE — S33

↓

END

**INTERNATIONAL SEARCH REPORT**

International application No.

PCT/JP2015/062503

| A. CLASSIFICATION OF SUBJECT MATTER |
|---|
| F16D48/02(2006.01)i |

According to International Patent Classification (IPC) or to both national classification and IPC

| B. FIELDS SEARCHED |
|---|

Minimum documentation searched (classification system followed by classification symbols)
F16D48/02

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2010-538216 A (Renault S.A.S.),<br>09 December 2010 (09.12.2010),<br>paragraphs [0010] to [0047]<br>& JP 5320398 B          & US 2011/0046862 A1<br>& WO 2009/030848 A1      & EP 2183500 A<br>& FR 2920382 A           & FR 2920382 A1<br>& KR 10-2010-0072225 A   & CN 101842608 A | 1<br>2-9 |
| A | WO 2005/047723 A1 (Hitachi, Ltd.),<br>26 May 2005 (26.05.2005),<br>page 7, line 35 to page 7, line 47<br>& EP 1688635 A1 | 1-9 |
| A | JP 2006-64039 A (Aisin Seiki Co., Ltd.),<br>09 March 2006 (09.03.2006),<br>paragraphs [0033] to [0046]<br>& EP 1630442 A1          & DE 602005024747 D | 1-9 |

☐ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22 July 2015 (22.07.15) | 04 August 2015 (04.08.15) |

| Name and mailing address of the ISA/<br>Japan Patent Office<br>3-4-3,Kasumigaseki,Chiyoda-ku,<br>Tokyo 100-8915,Japan | Authorized officer |
|---|---|
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4394386 B